Europäisches Patentamt

European Patent Office

Office européen des brevets

(11) Veröffentlichungsnummer: **0 373 327**
**A2**

## (12) EUROPÄISCHE PATENTANMELDUNG

(21) Anmeldenummer: **89119573.7**

(22) Anmeldetag: **21.10.89**

(51) Int. Cl.5: **B60G 17/04**

(30) Priorität: **16.12.88 DE 3842338**

(43) Veröffentlichungstag der Anmeldung:
**20.06.90 Patentblatt 90/25**

(84) Benannte Vertragsstaaten:
**DE ES FR GB IT NL SE**

(71) Anmelder: **Dr.Ing.h.c. F. Porsche
Aktiengesellschaft
Porschestrasse 42
D-7000 Stuttgart 40(DE)**

(72) Erfinder: **Ott, Gerhard, Dr. Dipl.-Ing.
Römerweg 98
D-7033 Herrenberg(DE)**

(54) Stellelement für ein aktives Feder-Dämpfer-System.

(57) Ein Stellelement für ein aktives Feder-Dämpfer-System ist zwischen einem Fahrzeugaufbau und einem Radführungsglied angeordnet und besteht aus einer Kolben-Zylinder-Einheit, die eine Druckkammer zur statischen Lastabstützung und zwei weitere Druckkammern zur dynamischen Ansteuerung umfaßt. Die Druckkammern sind in einem zylindrischen Gehäuse angeordnet und mit Anschlüssen für Hydraulikleitungen versehen. Eine erste und zweite Druckkammer sind im zylindrischen Gehäuse von einem Kolben unterteilt. Der Kolben ist mit einer die dritte Druckkammer bildenden hohlen Kolbenstange verbunden und alle Druckkammern sind über wenigstens drei Dichtungen gegeneinander abgeschlossen.

FIG.1

EP 0 373 327 A2

## Stellelement für ein aktives Feder-Dämpfer-System

Die Erfindung bezieht sich auf ein Stellelement für ein aktives Feder-Dämpfer-System nach dem Oberbegriff des Anspruchs 1.

Die Abstimmung von Feder-Dämpfer-Systemen am Fahrwerk von Kraftfahrzeugen besteht in einem Kompromiß zwischen Fahrsicherheit und Fahrkomfort. Bei bekannten "passiven" Feder-Dämpfer-Systemen ist die Kraft zwischen Fahrzeugaufbau und Rad nur eine Funktion des Federwegs und der Dämpfergeschwindigkeit. Die Energie kann über eine Feder nur gespeichert oder über einen Dämpfer absorbiert werden. Diese Beschränkungen führen zwangsläufig zu einem stark eingegrenzten Feld, in dem Fahrsicherheit und Fahrkomfort abgestimmt werden können.

Durch aktive Eingriffe in ein Feder-Dämpfer-System nach der DE-05 27 38 455 besteht die Möglichkeit, diese Feldgrenzen zu mehr Fahrsicherheit und mehr Komfort hin zu verschieben. Mit diesem bekannten aktiven Feder-Dämpfer-System kann in Abhängigkeit von verschiedensten Einflußgrößen eine beliebige Kraft aufgebracht werden. Für die Krafterzeugung finden vorzugsweise hydraulische Stellelemente Verwendung. Eine Grundlast (statische Radlast) wird über ein integriertes konventionelles hydropneumatisches Federelement abgestützt und nur die dynamischen Kräfte werden über ein aktives Stellglied aufgebracht. Nach der DE-OS 27 38 455 weist das bekannte Stellelement des aktiven Feder-Dämpfer-Systems Wirkflächen auf, die unterschiedlich groß sind und somit ungleiche Volumenströme in Zug- und Druckrichtung erzeugen. Desweiteren ist das Federbein zur gegenseitigen Abdichtung der Druckkammern mit einer Vielzahl von dynamischen Dichtungen versehen.

Aufgabe der Erfindung ist es, ein verbessertes Stellelement mit geringer Baulänge und vereinfachter Bauausführung zu schaffen, mit dem annähernd gleiche Volumenströme zwischen den Druckkammern erzeugt werden und diese gegeneinander mit einer geringstmöglichen Anzahl von dynamischen Dichtungen abgeschlossen sind.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß ein zylindrisch gestaltetes Gehäuse in Verbindung mit einer hohlen Kolbenstange drei Druckkammern bildet, wobei zwei zusammenarbeitende Druckkammern für die dynamische Radlast ansteuerbar sind und eine weitere Druckkammer zur Abstützung der statischen Radlast dient. Die Druckkammern sind so angeordnet, daß sich eine geringstmögliche Baulänge ergibt, in die wenigstens die dreifache Amplitude eingeht.

Das Stellelement besteht im wesentlichen aus zwei ineinandergeführten Bauteilen, die zwischen sich die Druckkammern bilden und über wenigstens drei dynamische Dichtungen gegeneinander abgedichtet sind.

Zur Erzeugung von gleichen Volumenströmen aus und in die zusammenarbeitenden Druckkammern beim Ein- und Ausfedern des Stellelements sind die Wirkflächen in diesen Druckkammern annähernd von gleicher Flächengröße.

Ausführungsbeispiele der Erfindung sind in der Zeichnung dargestellt und werden im folgenden näher beschrieben. Es zeigen

Fig. 1 ein Stellelement im Schnitt mit korrespondierenden Druckkammern im zylindrischen Gehäuse und einer dritten Druckkammer in einer hohlen Kolbenstange, und

Fig. 2 eine weitere Ausführung eines Stellelements mit korrespondierenden Druckkammern in Gehäusen innerhalb der hohlen Kolbenstange sowie einer dritten Kammer im zylindrischen Gehäuse.

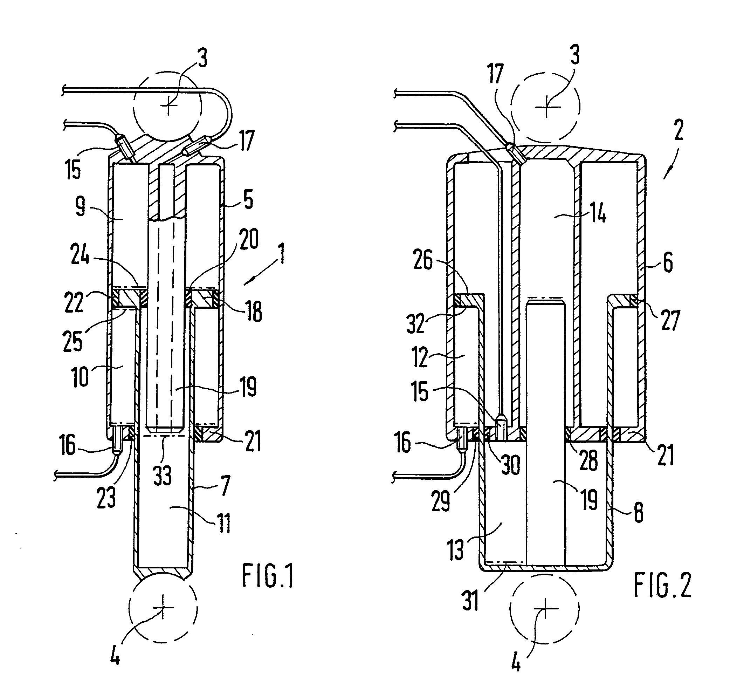

Ein Stellelement 1; 2 für ein aktives Feder-Dämpfer-System ist zwischen einem Fahrzeugaufbau 3 und einem Radführungsglied 4 angeordnet. Es umfaßt ein zylindrisches Gehäuse 5; 6, in dem eine hohle Kolbenstange 7; 8 geführt ist, die mit dem Gehäuse 5; 6 Druckkammern 9, 10 und 11 gemäß der Ausführung nach Fig. 1 und Druckkammern 12, 13 und 14 gemäß der Ausführung nach der Fig. 2 bildet. Mit diesen Druckkammern sind Anschlüsse 15, 16 und 17 für Hydraulikleitungen verbunden.

Gemäß der Ausführung nach Fig. 1 sind dynamische Radlasten über die erste und zweite Druckkammer 9 und 10 bzw. über die zweite und dritte Druckkammer 10 und 11 ansteuerbar. Zur statischen Lastaufnahme ist die dritte Druckkammer 11 bzw. die erste Druckkammer 9 vorgesehen. Die Druckkammern 9 und 10 sind gegeneinander durch einen Kolben 18 getrennt, welcher mit der hohlen Kolbenstange 7 verbunden ist, die sich an einem Radführungsglied 4 abstützt. Die dritte Druckkammer 11 ist gegenüber der ersten Druckkammer 9 und zu einer in die Druckkammer ragende Führungsstange 19 unter Zwischenschaltung einer dynamischen Dichtung 20 abgeschlossen. Die Führungsstange erstreckt sich bis zum Boden 21 des Gehäuses 5 und ermöglicht somit über die Dichtung 20 eine dichte Anlage des Kolbens 18 über die gesamte Amplitude des Stellelements 1. Umfangsseitig ist der Kolben 18 über eine Dichtung 22 gegenüber der Gehäusewand abgedichtet und eine weitere dynamische Dichtung 23 schließt die Kolbenstange 7 gegenüber dem Gehäuseboden 21 ab. Bei einer Druckbeaufschlagung der Kammer 9 bzw. 11 des Stellelements 1 über den Anschluß 15 bzw. 17 wird eine Wirkfläche 24 bzw. 33 beaufschlagt und das Stellelement 1 verlängert sich, während eine Beaufschlagung der Kammer 10 mit der Wirkfläche 24 des Kolbens 18 eine Verkürzung des Stellelements 1 bewirkt. Die Druckzuführung zur Druckkammer 11 erfolgt vorteilhafterweise über eine hohle Führungsstange 19, so daß der Anschluß 17 relativ zum Aufbau nur kleine Bewegungen ausführt.

Nach einer weiteren Ausführung des Stellelements 2 gemäß Fig. 2 ist im zylindrischen Gehäuse 6 die hohle Kolbenstange 8 geführt. Diese bildet mit dem im Gehäuse 6 geführten und als Kolben ausgeführten Endteil 26 eine erste Druckkammer 12 zur dynamischen Lastabstützung, wobei die zweite Druckkammer 13 zur dynamischen Lastabstützung außerhalb des Gehäuses 6 in der hohlen Kolbenstange 8 gebildet ist.

Innerhalb des Gehäuses 6 ist koaxial zur ersten Druckkammer 12 die dritte Druckkammer 14 zur statischen Lastabstützung angeordnet, die teilweise von der ersten Druckkammer 12 umgeben ist. Mit dem Boden 27 der Kolbenstange 8 ist die Führungsstange 19 verbunden, die in die dritte Druckkammer 14 ragt und eine der Kolbenstange 8 entsprechende Länge besitzt. Eine Abdichtung der ersten Druckkammer 12 gegenüber einer Wand des zylindrischen Gehäuses 6 erfolgt am Endteil 26 über eine dynamische Dichtung 27. Im Durchtrittsbereich der hohlen Kolbenstange 8 durch den Gehäuseboden 21 sind zwei weitere Dichtungen 29 und 30 vorgesehen. Desweiteren ist zwischen der Führungsstange 19 und dem Gehäuseboden 21 eine Dichtung 28 angeordnet.

Bei einer Druckbeaufschlagung der Kammer 13 über den Anschluß 15 wird die Wirkfläche 31 beaufschlagt und das Stellelement 2 verlängert. Wenn dagegen eine Beaufschlagung der Kammer 12 mit der Wirkfläche 32 über den Anschluß 16 erfolgt, wird das Stellelement verkürzt.

## Ansprüche

1. Stellelement für ein aktives Feder-Dämpfer-System zwischen einem Fahrzeugaufbau und einem Radführungsglied mit einer Kolben-Zylinder-Einheit, die eine Druckkammer zur statischen Lastabstützung und zwei weitere Druckkammern zur dynamischen Ansteuerung umfaßt, wobei die Druckkammern in einem zylindrischen Gehäuse angeordnet und mit Anschlüssen für Hydraulikleitungen versehen sind, **dadurch gekennzeichnet,** daß eine erste und zweite Druckkammer (9, 10) im zylindrischen Gehäuse (5) von einem Kolben (18) unterteilt sind und der Kolben (18) mit einer die dritte Druckkammer (11) bildenden hohlen Kolbenstange (7) verbunden ist und alle Druckkammern (9 bis 11) über wenigstens drei Dichtungen (20, 22 und 23) gegeneinander abgeschlossen sind.

2. Stellelement nach Anspruch 1, **dadurch gekennzeichnet,** daß mit dem zylindrischen Gehäuse (5) eine koaxial angeordnete, Führungsstange (19) verbunden ist, die sich unter Zwischenschaltung einer Dichtung (20) in die dritte Druckkammer (11) innerhalb der hohlen Kolbenstange (7) bis zum Gehäuseboden (21) erstreckt.

3. Stellelement für ein aktives Feder-Dämpfer-System zwischen einem Fahrzeugaufbau und einem Radführungsglied mit einer Kolben-Zylinder-Einheit, die eine Druckkammer zur statischen Lastabstützung und zwei weitere Druckkammern zur dynamischen Ansteuerung umfaßt, wobei die Druckkammern in einem zylindrischen Gehäuse angeordnet und mit Anschlüssen für Hydraulikleitungen versehen sind, insbesondere nach Anspruch 1, dadurch gekennzeichnet, daß eine erste Druckkammer (12) im Gehäuse (6) des Stellelements (2) und eine zweite Druckkammer (13) innerhalb einer hohlen Kolbenstange (8) vorgesehen ist und eine dritte Druckkammer (14) im zylindrischen Gehäuse (6) teilweise umgeben von der ersten Druckkammer (12) angeordnet und über eine mit der Kolbenstange (8) verbundene Führungsstange (19) abgeschlossen ist, die in die Druckkammer (14) ragt und unter Zwischenschaltung einer Dichtung (28) im Gehäuseboden (21) geführt wird.

4. Stellelement nach Anspruch 3, **dadurch gekennzeichnet,** daß das zylindrische Gehäuse (6) koaxial ineinanderliegende Druckkammern (12 und 14) umfaßt, wobei die erste Druckkammer (12) im Querschnitt kreisringförmig und die dritte Druckkammer (14) im Querschnitt kreisförmig ausgeführt ist.

5. Stellelement nach den Ansprüchen 3 oder 4, **dadurch gekennzeichnet,** daß die außenliegende Druckkammer (12) im zylindrischen Gehäuse (6) zwischen der Wandung der hohlen Kolbenstange (8) und der Wandung des Gehäuses gebildet wird und eine erste Wirkfläche (32) umfaßt und die weitere Druckkammer (13) innerhalb des Schaftes der Kolbenstange (8) angeordnet ist und eine weitere Wirkfläche (31) aufweist.

6. Stellelement nach den Ansprüchen 3, 4 oder 5, **dadurch gekennzeichnet,** daß die erste Druckkammer (12) im Gehäuse (6) über eine Umfangsdichtung (27) und eine Dichtung (29) abgeschlossen ist und daß die zweite und dritte Druckkammer (13 und 14) über im Gehäuseboden (21) vorgesehene weitere Dichtungen (28, 30) abgeschlossen sind.

FIG.1

FIG.2